# EUROPÄISCHE PATENTSCHRIFT

(11) **EP 1 127 665 B1**
(45) Veröffentlichungstag und Bekanntmachung des Hinweises auf die Patenterteilung: **10.12.2008**
(21) Anmeldenummer: 01104222.3
(22) Anmeldetag: 22.02.2001
(51) Int. Cl.: B27C 5/00, B27C 5/02, B27C 5/04, B23Q 11/00, B23D 59/00, G05B 19/4093

(54) **Maschine zum Bearbeiten von Werkstücken aus Holz, Kunststoff und dergleichen, insbesondere Kehlmaschine, sowie Verfahren zur Einstellung einer solchen Maschine**
Machine for working workpieces of wood, plastic or similar material, in particular a moulder, and method for adjusting said machine
Machine à travailler des pièces à usiner en bois, plastique ou similaires, de préférence une moulurière, et procédé de réglage d'une telle machine

(30) Priorität: 26.02.2000 DE 10009155
(43) Veröffentlichungstag der Anmeldung: 29.08.2001
(73) Patentinhaber: Michael Weinig Aktiengesellschaft, D-97941 Tauberbischofsheim (DE)
(72) Erfinder: Englert, Heinrich, 97922 Lauda-Königshofen (DE)
(74) Vertreter: Kohl, Karl-Heinz

(56) Entgegenhaltungen:
- EP-A- 0 924 037
- DE-A1- 19 616 165
- DE-A1- 19 756 503
- GB-A- 2 293 996
- US-A- 5 193 421

## Beschreibung

Die Erfindung betrifft eine Maschine zum Bearbeiten von Werkstükken aus Holz, Kunststoff und dergleichen, insbesondere eine Kehlmaschine, nach dem Oberbegriff des Anspruches 1 sowie ein Verfahren zur Einstellung einer solchen Maschine nach dem Oberbegriff des Anspruches 25.

Bei bekannten Holzbearbeitungsmaschinen, insbesondere Kehlmaschinen, ist das Einstellen bzw. Umstellen auf die Bearbeitung unterschiedlicher Werkstücke ein zeitraubender und umständlicher Vorgang. So müssen den Werkzeugen zugeordnete Andruckelemente oder Anschläge und Tischplatten zusätzlich zu den Werkzeugen in der Maschine eingestellt werden. Hierzu wird zunächst das Werkzeug auf die Spindel gesteckt. Anschließend können die Andruckelemente, die Anschläge oder die Tischplatte in bezug auf dieses Werkzeug eingestellt werden. Aufgrund dieser Vorgehensweise ist die Einstellung der Maschine zeitaufwendig. Insbesondere ist nach der Einstellung nicht sichergestellt, daß das durch dieses Werkzeug bearbeitete Werkstück die geforderte Bearbeitungsgenauigkeit hat. Darum ist es üblich, zumindest ein Werkstück im Probelauf durch die Maschine zu schicken, das Profil des Werkstückes mit dem Sollprofil zu vergleichen und bei Abweichungen die entsprechenden Elemente an der Maschine nachzustellen. Insbesondere die genaue Einstellung der Andruckelemente in bezug auf das Werkzeug ist aufwendig und langwierig. Häufig müssen die Andruckelemente nach einem Probedurchlauf des Werkstückes nachgestellt werden, um die gewünschte hohe Bearbeitungsgenauigkeit am Werkstück zu erhalten. Die Andruckelemente sollen so nahe wie möglich an das Werkzeug herangeführt werden, um das Werkstück bei seiner Bearbeitung genau und stabil zu führen.

Aus der Druckschrift EP-A-0 924 037 sind eine Maschine und ein Verfahren bekannt, bei dem ein Werkzeug mit einem Transponder versehen ist, der werkzeugspezifische Daten enthält. Damit diese werkzeugspezifischen Daten erfasst werden können, muss das Werkzeug in die Maschine eingesetzt werden, damit ein an der Spindelhülse vorgesehener Lesekopf die Daten vom Transponder lesen kann. Für den Einsatz der Maschine ist es somit erforderlich, das jeweilige Werkzeug erst in die Maschine einzusetzen, bevor die Verstellungen von der Steuerung der Maschine vorgenommen werden können.

Der Erfindung liegt die Aufgabe zugrunde, die gattungsgemäße Maschine und das gattungsgemäße Verfahren so auszubilden, daß Ein- und/oder Umstellungen an der Maschine innerhalb kürzester Zeit mit hoher Genauigkeit vorgenommen werden können.

Diese Aufgabe wird bei der gattungsgemäßen Maschine erfindungsgemäß mit den kennzeichnenden Merkmalen des Anspruches 1 und beim gattungsgemäßen Verfahren erfindungsgemäß mit den kennzeichnenden Merkmalen des Anspruches 25 gelöst.

Bei der erfindungsgemäßen Maschine werden charakteristische Daten des Werkzeuges außerhalb der Maschine erfaßt und im Datenspeicher abgelegt. Anhand dieser im Datenspeicher abgelegten Werkzeugdaten kann das einstellbare Element, wie Andruckelemente, Andrucklineale oder dergleichen, genau positioniert werden, ohne daß das Werkzeug in der Maschine sitzt.

Bei der Einstellung der Maschine werden die charakteristischen Daten des Werkzeuges der Steuerung zugeführt, die anhand dieser Werkzeugdaten die notwendige Positionierung des entsprechenden einstellbaren Elementes berechnet und zur Weiterverarbeitung bereitstellt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig.1: in Seitenansicht und in schematischer Darstellung eine erfindungsgemäße Maschine,
- Fig. 2: eine Draufsicht auf die Maschine gemäß Fig. 1, durch die ein breites Werkstück geführt wird,
- Fig. 3: in einer Darstellung entsprechend Fig. 2 die Maschine, durch die ein schmales Werkstück geführt wird,
- Fig. 4: in vergrößerter Darstellung eine obere Spindel, auf der ein Werkzeug mit einem großen Durchmesser sitzt,
- Fig. 5: die obere Spindel gemäß Fig. 4, auf der ein Werkzeug mit einem kleinen Durchmesser sitzt,
- Fig. 6: in vergrößerter Darstellung eine linke Spindel, auf der ein Werkzeug mit einem großen Durchmesser sitzt,
- Fig. 7: die linke Spindel gemäß Fig. 6, auf der ein Werkzeug mit einem kleinen Durchmesser sitzt,
- Fig. 8: eine Achssteuerung für die obere Spindel der erfindungsgemäßen Maschine,
- Fig. 9: in schematischer Darstellung einen Schaltplan der Achssteuerung,
- Fig. 10: ein Werkzeug, das auf den Spindeln der Maschine befestigt wird.

Die Maschine ist eine Kehlmaschine, mit der Werkstücke bei ihrem Durchlauf durch die Maschine profiliert werden. Die Werkstücke werden beispielsweise zur Herstellung von Fenster- oder Türrahmen verwendet. Die Maschine hat ein Maschinenbett 1, auf dessen Oberseite 2 die zu bearbeitenden Werkstücke 3 mit wenigstens einer Vorschubeinheit 4 transportiert werden. Die Vorschubeinheit 4 hat einen Transportbalken 5, der sich mit Abstand oberhalb des Maschinenbettes 1 befindet und der Vorschubwalzen 6 zum Transport der Werkstücke 3 durch die Maschine aufweist. Die Vorschubwalzen 6 sitzen auf horizontalen Wellen 7, die am freien Ende von Vorschubpendeln 8 gelagert sind. Sie sind um eine zwischen ihnen liegende, parallele Achse 9 schwenkbar an einem Pendelhalter 10 gelagert, der am Transportbalken 5 befestigt ist. An den freien Enden der Vorschubpendel 8 greifen Andruckzylinder 11 an, die am Transportbalken 5 gelagert sind und die Vorschubwalzen 6 auf das zu transportierende Werkstück 3 drücken. Der Transportbalken 5 kann in Vertikalrichtung eingestellt werden.

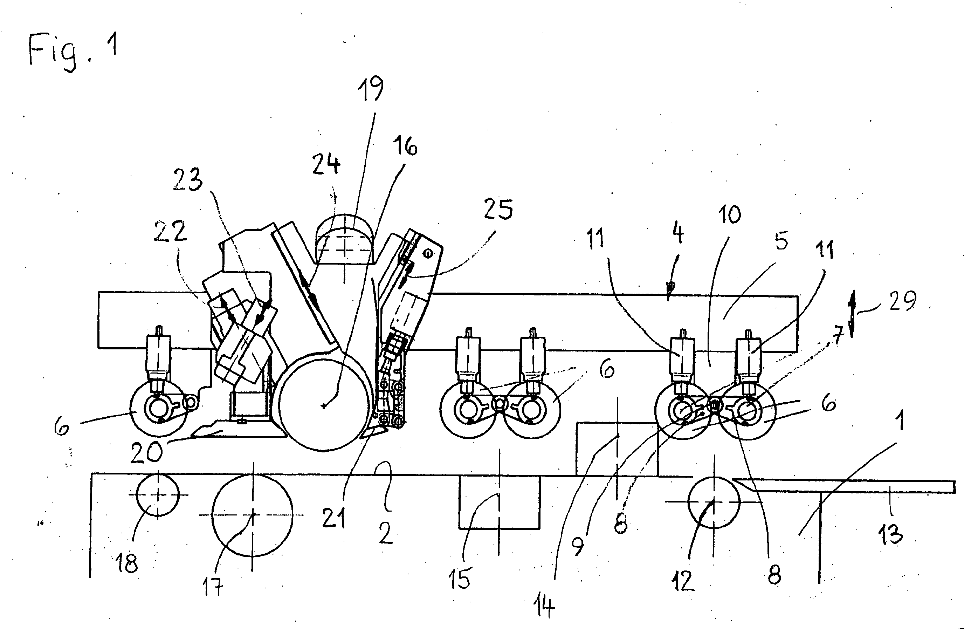

Im Bereich unterhalb des in Fig. 1 rechten Vorschubwalzenpaares 6 befindet sich eine horizontale Abrichtspindel 12, der ein Abrichttisch 13 vorgeschaltet ist. Er kann in Vertikalrichtung verstellt werden, um die Größe der Spanabnahme am Werkstück 3 einzustellen. Die Abrichtspindel 12 ist im Maschinenbett 1 drehbar gelagert. Die beiden Vorschubwalzen 6 sind im Bereich oberhalb der Abrichtspindel 12 so angeordnet, daß die Wellen 7 der Vorschubwalzen 6 beiderseits der Drehachse der Abrichtspindel 12 liegen, in Draufsicht gesehen. In Fig. 1 ist der Einfachheit halber das auf der Abrichtspindel sitzende Werkzeug nur schematisch in Form des Flugkreises dargestellt, mit dem die Unterseite des Werkstückes 3 bearbeitet wird.

Dem in Fig. 1 rechten Vorschubwalzenpaar 6 nachgeschaltet ist eine vertikale Spindel 14, auf der ein schematisch dargestelltes Werkzeug sitzt, mit dem die in Transportrichtung der Werkstücke 3 rechte Seite bearbeitet wird.

In Transportrichtung der Werkstücke 3 hinter der rechten vertikalen Spindel 14 befindet sich eine vertikale linke Spindel 15, auf der ein schematisch dargestelltes Werkzeug sitzt, mit dem die in Transportrichtung linke Seite des Werkstückes 3 bearbeitet wird. In Höhe dieser linken Spindel 15 befindet sich das in Fig. 1 mittlere Vorschubwalzenpaar 6.

In Vorschubrichtung mit Abstand hinter diesem mittleren Vorschubwalzenpaar 6 ist die Maschine mit einer oberen horizontalen Spindel 16 versehen. Das auf ihr sitzende Werkzeug bearbeitet die Oberseite des Werkstückes 3.

In Vorschubrichtung der Werkstücke 3 mit geringem Abstand hinter der oberen Spindel 16 ist im Maschinenbett 1 eine untere Spindel 17 vorgesehen, der mit geringem Abstand eine im Maschinenbett gelagerte Tischwalze 18 nachgeordnet ist. Das auf der unteren Spindel 17 sitzende, schematisch dargestellte Werkzeug bearbeitet die Unterseite des Werkstückes 3 beim Durchlauf durch die Maschine.

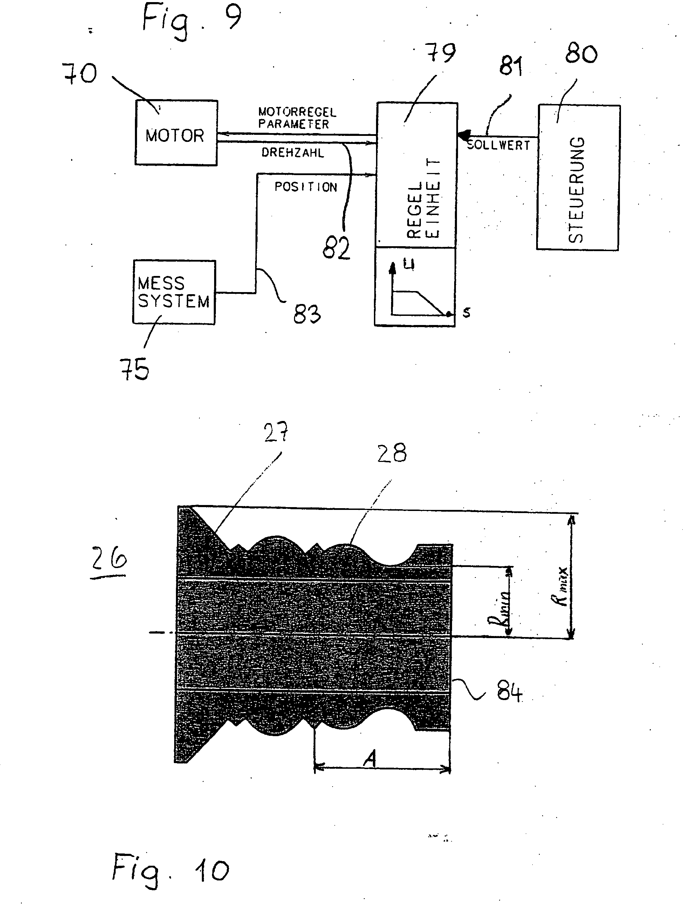

Die in Fig. 1 linke Vorschubwalze 6 ist mit geringem Abstand in Vorschubrichtung der Werkstücke 3 hinter einer Absaughaube 19 vorgesehen, unterhalb der die Spindel 16 angeordnet ist. Im Bereich der Absaughaube 19 sind einstellbare Andruckelemente 20, 21 vorgesehen, die mit geringem Abstand vor und hinter dem auf der Spindel 16 sitzenden Werkzeug angeordnet sind und auf der Oberseite des Werkstückes 3 bei dessen Vorschub durch die Maschine aufliegen. Die entsprechende Einstellvorrichtung ist bekannt (DE 43 32 281 A1), so daß sie im folgenden nur kurz erläutert wird. In Fig. 1 sind die entsprechenden Verstellrichtungen 22 bis 25 dargestellt. Durch Verstellung der Andruckelemente 20, 21 in diesen Richtungen 22 bis 25 ist eine optimale Anpassung der Lage der Andruckelemente in bezug auf das auf der Spindel 16 sitzende Werkzeug möglich, d.h. die Andruckelemente werden so nah wie möglich an das Werkzeug herangeführt. Fig. 10 zeigt beispielhaft ein auf der Spindel 16 zu befestigendes Werkzeug 26, das mit Profilmessern 27 bestückt ist. Durch das Messerprofil 28 ergibt sich ein maximaler Radius Rₘₐₓ sowie ein minimaler Radius Rₘᵢₙ des Werkzeuges 26. Durch den maximalen Radius Rₘₐₓ wird der maximale Flugkreisradius und durch den kleinsten Radius Rₘᵢₙ der minimale Flugkreisradius des Werkzeuges 26 bestimmt. Die Andruckelemente 20, 21 (Fig. 1) werden in bezug auf den maximalen Radius Rₘₐₓ und den minimalen Radius Rₘᵢₙ des auf der Spindel 16 sitzenden Werkzeuges 26 eingestellt. Es ist auch möglich, die Andruckelemente 20, 21 in bezug auf den maximalen Radius Rₘₐₓ und die Kehltiefe des mit dem Profilmesser 27 erzeugten Profils am Werkstück 3 einzustellen. Die Kehltiefe ergibt sich als Rₘₐₓ - Rₘᵢₙ. In diesem Falle werden die Andruckelemente 20, 21 durch Verstellen in Richtung 23 und 24 auf den maximalen Radius Rₘₐₓ und durch Verstellen in Richtung 22 bzw. 25 auf die Kehltiefe (Rₘₐₓ - Rₘᵢₙ) eingestellt.

Das beispielhaft dargestellte Werkzeug 26 kann auf jede geeignete Spindel der Maschine gesteckt werden.

Auch der Transportbalken 5 der Vorschubeinheit 4 läßt sich in Vertikalrichtung 29 verstellen, um die Vorschubwalzen 6 an die Dicke des zu transportierenden Werkstückes 3 anzupassen. Es ist aber auch möglich, den Transportbalken 5 in bezug auf den minimalen Flugkreisradius Rₘᵢₙ des Werkzeuges 26 einzustellen, das in diesem Fall auf der oberen Spindel 16 sitzt, und in bezug auf die Werkstückdicke zusammen mit der oberen Spindel 16 zu verstellen.

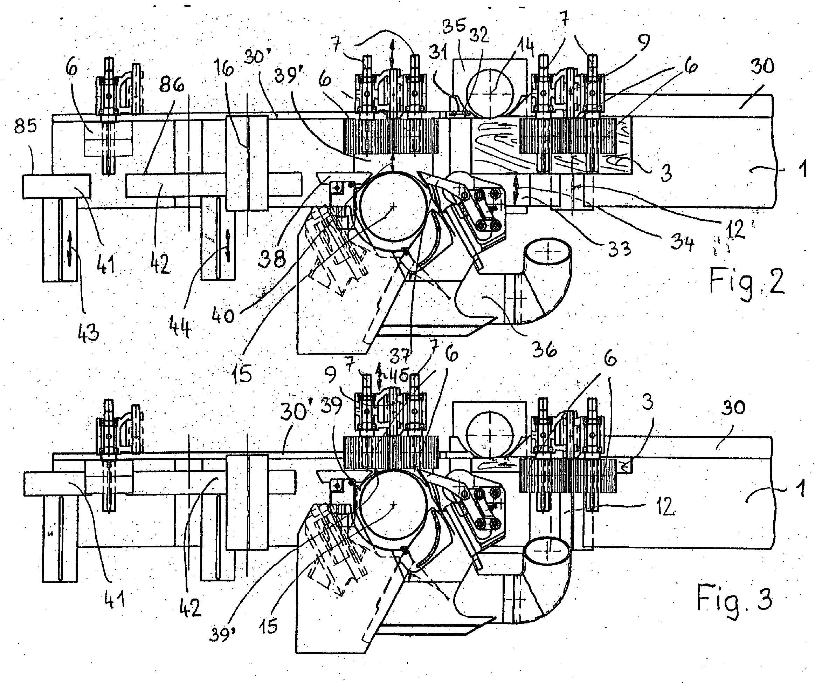

Die unbearbeiteten Werkstücke 3 werden längs eines Anschlaglineales 30 in die Maschine geführt (Fig. 2), an dem die Werkstücke 3 mit ihrer rechten Seite anliegen. Das Anschlaglineal 30 ist quer zur Vorschubrichtung des Werkstückes 3 zur Einstellung der Spanabnahme durch das auf der rechten Spindel 14 sitzende Werkzeug einstellbar. Die erforderliche Spanabnahme ist abhängig von der Krümmung und dem Übermaß des Werkstückes 3. Unter Übermaß ist das Verhältnis von Rohholzbreite zu Fertigholzbreite zu verstehen. Im Bereich nach der rechten Spindel 14 liegt ein Anschlaglineal 30'. In Vorschubrichtung unmittelbar hinter der rechten Spindel 14 befindet sich ein Anschlag 31, der in Verstellrichtung 32 bezüglich des auf der rechten Spindel 14 sitzenden Werkzeuges eingestellt werden kann. Die Verstellrichtung 32 liegt parallel zur Vorschubrichtung des Werkstückes 3. Der Anschlag 31 wird in bezug auf den Radius Rₘₐₓ und Rₘᵢₙ des auf der Spindel 14 sitzenden Werkzeuges eingestellt.

Die rechte Spindel 14 befindet sich an einem Schieber 35, der in Pfeilrichtung 34 senkrecht zur Vorschubrichtung des Werkstückes 3 verstellbar ist. Durch Verschieben des Schiebers 35 in Verstellrichtung 34 läßt sich die rechte Spindel 14 in Abhängigkeit von dem auf ihr sitzenden Werkzeug genau in bezug auf das Werkstück 3 bzw. das Anschlaglineal 30' einstellen.

Auf dem Schieber 35 ist eine Tischplatte 33 vorgesehen, die ebenfalls in Pfeilrichtung 34 verstellbar ist. Die Tischplatte 33 kann auch relativ zum Schieber 35 sowie dem auf der Spindel 14 sitzenden Werkzeug in Abhängigkeit von dessen Flugkreisradius Rₘₐₓ eingestellt werden.

Die rechte Spindel 14 liegt unter einer (nicht dargestellten) Absaughaube, mit der die bei der Bearbeitung des Werkstückes 3 anfallenden Späne abgesaugt werden. Der linken Spindel 15 ist ebenfalls eine Absaughaube 36 zugeordnet. In Vorschubrichtung vor und hinter der linken Spindel 15 sind Andruckelemente 37 und 38 vorgesehen, die an der in Vorschubrichtung linken Seite des Werkstückes 3 anliegen und wie die Andruckelemente 20, 21 der oberen Spindel 16 (Fig. 1) in bezug auf das auf der Spindel 15 sitzende Werkzeug einstellbar sind. Die linke Spindel 15 ist ebenfalls auf einem Schieber 39 gelagert, der in Pfeilrichtung 40 senkrecht zur Vorschubrichtung des Werkstückes 3 verschoben werden kann, um das auf der Spindel 15 sitzende Werkzeug in bezug auf das Werkstück 3 einzustellen. Auf dem Schieber 39 ist eine Tischplatte 39' vorgesehen, die ebenso wie die Tischplatte 33 in bezug auf den maximalen Radius Rₘₐₓ des jeweiligen Werkzeuges eingestellt wird.

In Vorschubrichtung mit Abstand hinter der linken Spindel 37 sind zwei Andrucklineale 41 und 42 vorgesehen, die senkrecht zur Vorschubrichtung des Werkstückes 3 in Pfeilrichtung 43 bzw. 44 verstellt werden können. Somit können die Andrucklineale 41, 42 in bezug auf die Breite des Werkstückes 3 eingestellt werden. Die Einstellung kann auch in bezug auf den minimalen Radius Rₘᵢₙ des auf der linken Spindel 15 sitzenden Werkzeuges erfolgen. Die Andrucklineale 41, 42 können dann zusammen mit dem Werkzeug der linken Spindel 15 auf die Werkstückbreite eingestellt werden.

Die auf den Wellen 7 sitzenden Vorschubwalzen 6 sind so eingestellt, daß sie, in Draufsicht gemäß Fig. 2 gesehen, über ihre Breite auf dem Werkstück 3 aufliegen, dessen Breite beispielhaft größer ist als die Breite der Vorschubwalzen 6. Beim Vorschub des Werkstückes 3 in der Maschine wird zunächst dessen Unterseite mit dem auf der Abrichtspindel 12 sitzenden Werkzeug abgerichtet. Der Abrichttisch 13 (Fig. 1) wird entsprechend der gewünschten Spanabnahme in bezug auf das auf der Abrichtspindel 12 sitzende Werkzeug eingestellt. Beim weiteren Vorschub wird die in Vorschubrichtung rechte Seite mit dem auf der rechten Spindel 14 sitzenden Werkzeug bearbeitet. Das auf der linken Spindel 15 sitzende Werkzeug bearbeitet beim weiteren Vorschub die linke Seite des Werkstückes 3, dessen Oberseite anschließend durch das auf der oberen Spindel 16 sitzende Werkzeug bearbeitet wird. Mit dem auf der unteren Spindel 17 sitzenden Werkzeug wird schließlich die Unterseite des Werkstückes 3 nochmals bearbeitet.

Fig. 3 zeigt, daß in der Maschine auch sehr schmale Werkstücke 3 bearbeitet werden können, deren Breite wesentlich kleiner ist als die Breite der Vorschubwalzen 6. Aufgrund der schmalen Breite des Werkstückes 3 müssen die linke Spindel 15 und die Andrucklineale 41, 42 senkrecht zur Vorschubrichtung in Richtung auf das Anschlaglineal 30 verstellt werden. Der Schieber 39, welcher die linke Spindel 15 trägt, wird entsprechend verschoben. Um eine Kollision mit den gegenüberliegenden Vorschubwalzen 6 zu vermeiden, werden diese entsprechend der Werkstückbreite und dem Radius Rₘₐₓ des auf der linken Spindel 15 sitzenden Werkzeuges axial zurückgefahren. Dadurch liegen die Vorschubwalzen 6, in Draufsicht gemäß Fig. 3 gesehen, nur mit einem Teil ihrer Breite oberhalb der Transportbahn des Werkstückes 3. Die linke Spindel 15 mit der Absaughaube 36 und der Einstellvorrichtung für die Andruckelemente 37, 38 sind in Vorschubrichtung des Werkstückes 3 so angeordnet, daß sie bei der beschriebenen Verstellung nicht mit den Vorschubwalzen 6 in Höhe der Abrichtspindel 12 und dem benachbarten Anschlaglineal 42 in Kollision kommen. Die mittleren Vorschubwalzen 6 werden in Pfeilrichtung 45 senkrecht zur Vorschubrichtung gemeinsam mit den Wellen 7 und/oder den Vorschubpendeln 8 und der Pendelachse 9 und/oder dem Pendelhalter 10 verstellt.

Wie die Fig. 2 und 3 zeigen, können die Andruckelemente 37, 38 der linken Spindel 15 in gleicher Weise verstellt werden wie die Andruckelemente 20, 21 der oberen Spindel 16. Auf diese Weise ist eine einfache Einstellung der Andruckelemente 37, 38 an das auf der linken Spindel 15 sitzende Werkzeug möglich.

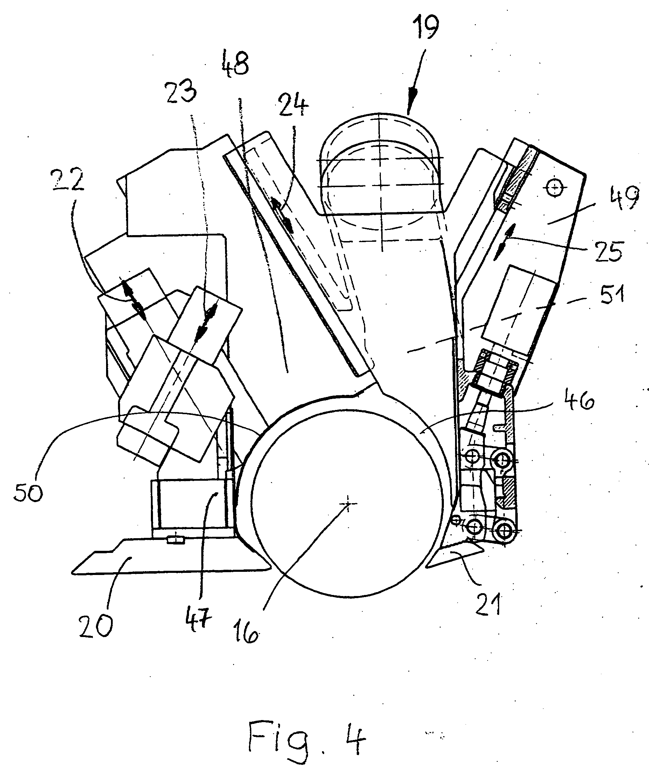

Fig. 4 zeigt in vergrößerter Darstellung die obere Spindel 16, die in einem Absaugraum 46 der Absaughaube 19 untergebracht ist. Die Größe des Absaugraumes 46 ist an den Durchmesser des auf der Spindel 16 sitzenden Werkzeuges angepaßt. Erreicht wird dies dadurch, daß die Wände des Absaugraumes 46 zumindest teilweise aus Trägern 47 bis 49 der Andruckelemente 20, 21 gebildet werden. Die Innenwand 50 des Absaugraumes 46 verläuft annähernd koaxial zum Flugkreisdurchmesser. Die Innenwand 50 hat nur geringen Abstand vom Flugkreisdurchmesser, so daß die bei der Bearbeitung der Werkstücke 3 anfallenden Späne optimal in einen Saugkanal 51 der Absaughaube 19 gelangen.

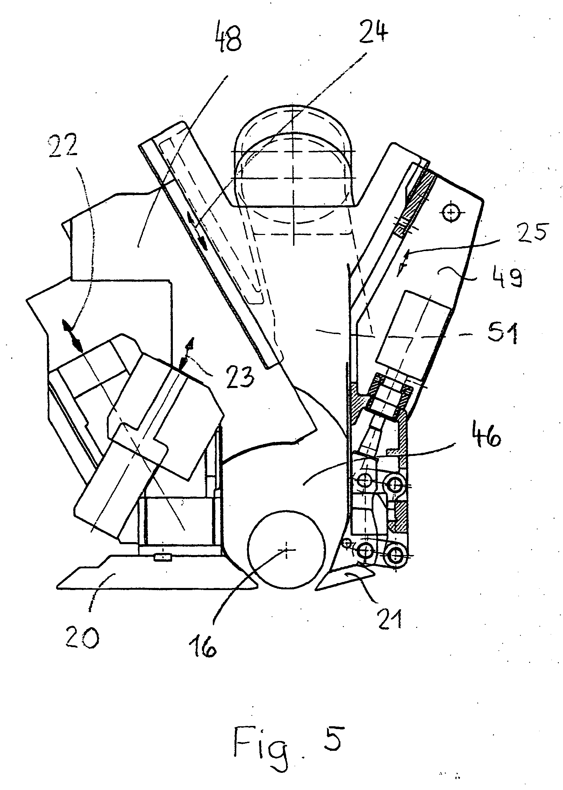

Fig. 5 zeigt die Verhältnisse, wenn auf der oberen Spindel 16 ein Werkzeug mit einem kleinen Flugkreisdurchmesser sitzt. Entsprechend diesem kleineren Flugkreisdurchmesser sind die Andruckelemente 20, 21 entsprechend eingestellt worden. Der Träger 49 für das Andruckelement 21 ist in Pfeilrichtung 25 nach unten verstellt worden. Die Absaughaube 19 ist in Pfeilrichtung 24 und der Träger 47 in Pfeilrichtung 22 bzw. 23 verschoben worden. Auf diese Weise ist die Größe des Absaugraumes 46 bei der Einstellung der Andruckelemente 20, 21 automatisch verkleinert und an das kleinere Werkzeug auf der Spindel 16 angepaßt worden. Die Begrenzung des Absaugraumes 46, die durch die Innenwände der Träger 47 bis 49 gebildet wird, wird bei der Verstellung der Andruckelemente 20, 21 entsprechend mit verstellt, so daß eine selbsttätige Volumenanpassung des Absaugraumes 46 erreicht wird. Auf diese Weise wird erreicht, daß auch bei einem einen kleineren Flugkreisdurchmesser aufweisenden Werkzeug die Späne optimal in den Saugkanal 51 abgesaugt werden. Fig. 5 zeigt beispielhaft die Situation, wenn das auf der Spindel 16 sitzende Werkzeug keine Kehltiefe aufweist, die Messer dieses Werkzeuges über ihre Länge somit einen konstanten Flugkreisdurchmesser haben. Fig. 4 hingegen zeigt die Verhältnisse, wenn das auf der Spindel 16 sitzende Werkzeug Profilmesser mit einer Kehltiefe aufweist.

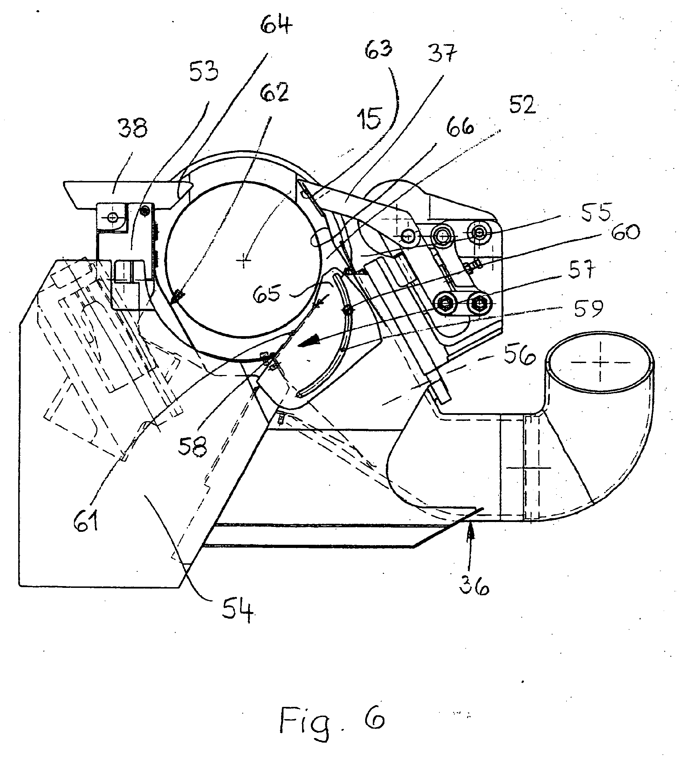

Fig. 6 zeigt in Draufsicht die linke Spindel 15, auf der ein Werkzeug mit einem großen Flugkreisdurchmesser sitzt. Das auf der linken Spindel 15 sitzende Werkzeug hat im Ausführungsbeispiel keine Profilmesser, sondern Messer mit geraden Schneidkanten, so daß diese Messer keine Profiltiefe haben. Das Werkzeug bzw. die Spindel 15 liegt in einem Absaugraum 52 der Absaughaube 36. Die beiden Andruckelemente 37, 38 vor und hinter der Spindel 15 werden in gleicher Weise verstellt wie die Andruckelemente 20, 21 der oberen Spindel 16. Entsprechend der Absaughaube 19 wird der Absaugraum 52 von Trägern 53 bis 55 der Andruckelemente 37, 38 begrenzt. In Höhe des Saugkanales 56 befindet sich ein Verstellelement 57, das um eine parallel zur Spindelachse liegende Achse 58 schwenkbar ist. Das Verstellelement 57 hat einen gekrümmten Schlitz 59, in den ein Führungselement 60 eingreift, das an der Absaughaube 36 vorgesehen ist. Das Verstellelement 57 hat eine der Spindel 15 zugewandte Stirnseite 61, die einen Teil der Innenwand 62 des Absaugraumes 52 bildet. Wie bei der Absaughaube 19 wird der Absaugraum 52 auch durch die der Spindel 15 zugewandten Stirnseiten 63 und 64 der beiden Andruckelemente 37, 38 begrenzt. Der Saugkanal 56 schließt wie der Saugkanal 51 tangential an den Absaugraum 52 an. Eine Eintrittsöffnung 65 erstreckt sich zwischen der Stirnseite 61 des Verstellelementes 57 und dem gegenüberliegenden Innenwandabschnitt 66. Somit ist die Innenwand 62 des Absaugraumes 52 annähernd an den Flugkreisdurchmesser des auf der Spindel 15 sitzenden Werkzeuges angepaßt. Die Innenwand 62 hat nur geringen Abstand vom Flugkreisdurchmesser. Dadurch werden die bei der Bearbeitung des Werkstückes 3 anfallenden Späne über die Eintrittsöffnung 65 zuverlässig in den Saugkanal 56 geführt. Die Stirnseite 61 des Verstellelementes 57 wird durch ein Spanleitblech gebildet, das dafür sorgt, daß die Späne zuverlässig zur Eintrittsöffnung 65 geleitet werden.

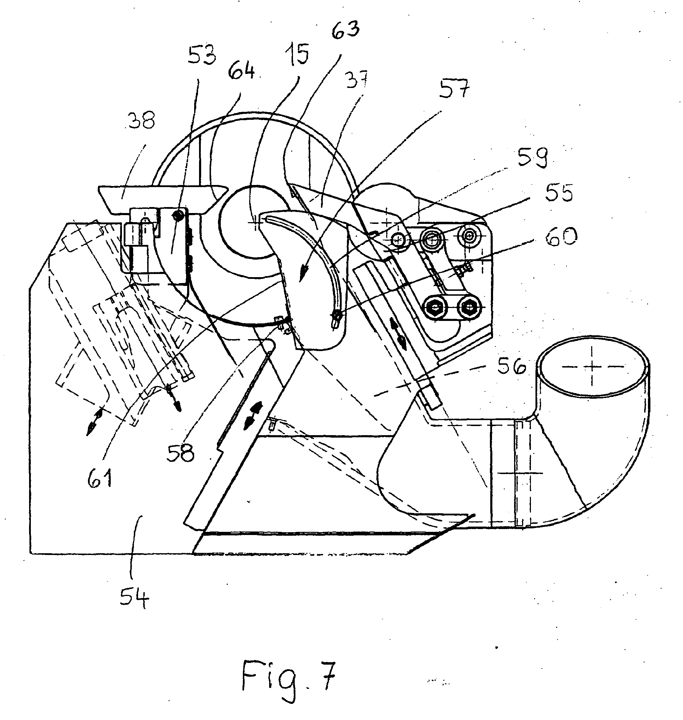

Fig. 7 zeigt den Fall, daß auf der Spindel 15 ein Werkzeug mit kleinem Flugkreisdurchmesser sitzt. Dieses Werkzeug hat ebenfalls Messer mit geraden Schneidkanten. Die Andruckelemente 37, 38 werden an den neuen Flugkreisdurchmesser durch entsprechende Verstellung angepaßt. Außerdem wird das Verstellelement 58 entgegen dem Uhrzeigersinn um die Achse 58 verschwenkt. Die Stirnseite 61 liegt dann nicht mehr annähernd tangential zum Flugkreisdurchmesser wie bei der Stellung gemäß Fig. 6, sondern etwa radial. Im übrigen sind die Träger 53 bis 55 zur Verstellung der Andruckelemente 37, 38 verschoben worden, wie dies für die Andruckelemente 20, 21 erläutert worden ist.

Durch die Verstellung des Verstellelementes 57 wird gewährleistet, daß die Eintrittsöffnung 65 nahe am Umfang des Werkzeuges liegt. Dadurch werden die bei der Bearbeitung des Werkstückes 3 anfallenden Späne zuverlässig in den Saugkanal 56 gesaugt. Die Andruckelemente 37, 38 liegen mit ihren Stirnseiten 63, 64 benachbart zum Flugkreisdurchmesser des Werkzeuges.

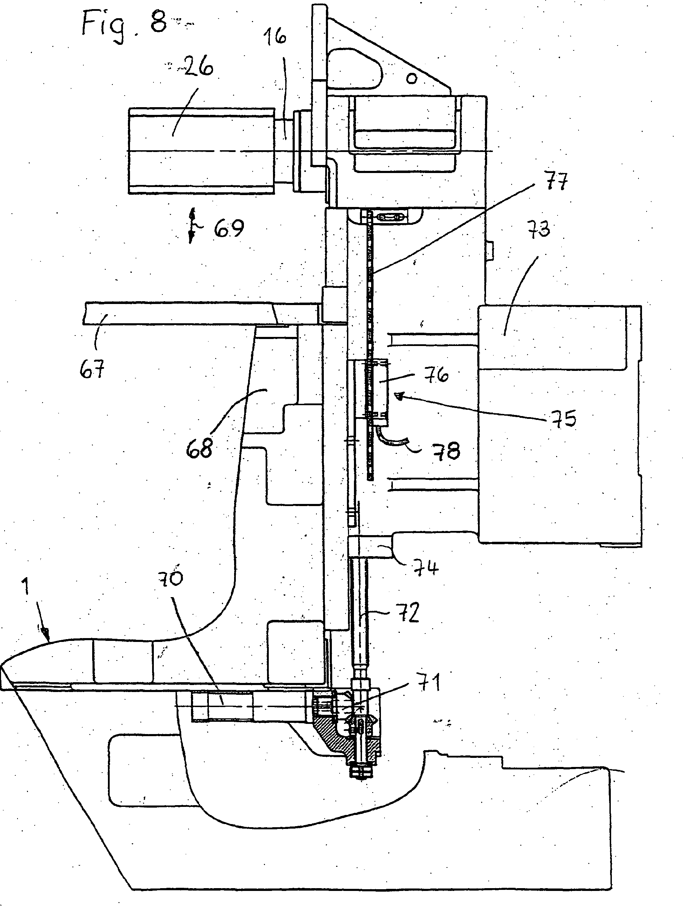

Fig. 8 zeigt die Achssteuerung am Beispiel der oberen Spindel 16 der Maschine. Auf der Spindel 16 sitzt das Werkzeug 26, mit dem die Oberseite des Werkstückes bearbeitet wird. Das Werkzeug 26 bzw. die Spindel 16 befindet sich mit Abstand oberhalb eines Maschinentisches 67 der Maschine. Er ist auf einem Maschinenständer 68 vorgesehen, der Teil des Maschinenbettes 1 ist. Zur Anpassung an unterschiedlich dicke Werkstücke bzw. an unterschiedliche Flugkreisdurchmesser der Werkzeuge muß die Spindel 16 in Radialrichtung 69 relativ zum Maschinentisch 67 verstellt werden. Hierzu ist im Maschinenbett ein Positioniermotor 70 untergebracht, der über ein Getriebe 71, vorzugsweise ein Kegelradgetriebe, eine vertikal angeordnete Spindel 72 antreibt, die vorzugsweise eine Trapezgewindespindel ist. Auf ihr ist über eine Mutter 74, vorzugsweise eine Trapezgewindemutter, ein Spindelschieber 73 gelagert, der die Spindel 16 trägt. Durch Drehen der Spindel 72 wird der Spindelschieber 73 über die Muttern 74 in Höhenrichtung 69 verstellt, um die Spindel 16 in die gewünschte Lage zu verstellen.

Um den Verschiebeweg des Spindelschiebers 73 und damit der Spindel 16 zuverlässig einstellen und/oder ablesen zu können, ist ein Wegmeßsystem 75 vorgesehen. Es hat einen am Maschinenständer 68 befestigten Lesekopf 76, dem ein Maßstab 77 zugeordnet ist, der am Spindelschieber 73 vorgesehen ist. Der Lesekopf 76 ist über Leitungen 78 an einen Rechner, einen Monitor oder dergleichen angeschlossen. Um für den Spindelschieber 73 Endstellungen zu definieren, können (nicht dargestellte) Endschalter vorgesehen sein.

Dem Positioniermotor 70 ist eine Regeleinheit 79 vorgeschaltet (Fig. 9). Die Regeleinheit 79 erhält von einer Steuerung 80 Sollwerte 81, die in der Regeleinheit 79 mit vom Meßsystem 75 gelieferten Istwerten 83 verglichen werden. Außerdem erhält die Regeleinheit 79 vom Positioniermotor 70 Signale 82, welche die Drehzahl des Positioniermotors 70 kennzeichnen. Sobald der Spindelschieber 73 und damit die Spindel 16 eine bestimmte Position erreicht haben, was durch das Meßsystem 75 ermittelt wird, wird die Drehzahl des Motors 70 heruntergeregelt. Dies ist in Fig. 9 anhand des Drehzahl-Weg-Diagrammes dargestellt. Daraus ergibt sich, daß der Motor 70 zunächst mit hoher Drehzahl den Spindelschieber 73 bis zu der bestimmten Position verfährt. Sobald sie erreicht ist, wird die Drehzahl des Motors 70 abgesenkt, wobei der Spindelschieber 73 und die Achse 16 lagegeregelt über das Meßsystem 75 in die gewünschte Position verfahren werden. In der Regeleinheit 79 erfolgt der Vergleich der von der Steuerung 80 gelieferten Sollwerte 81 mit den vom Motor 70 und vom Meßsystem 75 gelieferten Istwerten 82 und 83. Aufgrund der beschriebenen lagegeregelten Bewegung der Spindel 16 wird eine hohe Positioniergenauigkeit erreicht. Sobald die Spindel 16 ihre gewünschte Position erreicht hat, wird die Lageregelung abgeschaltet.

Bei den herkömmlichen Maschinen ist das Einstellen bzw. das Umstellen auf andere Werkstücke zeitraubend und umständlich. Insbesondere muß in einem Probelauf wenigstens ein Werkstück durch die Maschine transportiert werden, um das hergestellte Profil mit dem Sollprofil zu vergleichen und bei Abweichungen Nacheinstellungen vorzunehmen. Bei der beschriebenen Maschine werden Werkzeugdaten außerhalb der Maschine erfaßt und in einem Speicher der Steuerung als Datenwerte abgelegt. Die Werkzeugdaten sind die Radialmaße sowie das Axialmaß des Werkzeuges. Fig. 10 zeigt das Werkzeug 26, dessen Profilmesser 27 das Messerprofil 28 haben. Aufgrund dieses Profiles 28 hat das Werkzeug 26 einen minimalen Radius Rₘᵢₙ sowie einen maximalen Radius Rₘₐₓ. Die Kehltiefe der Profilmesser 27 ergibt sich aus der Beziehung Rₘₐₓ - Rₘᵢₙ. Außerdem wird das Axialmaß A des Werkzeuges 26 erfaßt. Dieses Werkzeugaxialmaß A ist der Abstand einer charakteristischen Stelle des Messerprofiles 28 von einer Anlagefläche 84 des Werkzeuges 26 an der Spindel 16. Die genannten Werkzeugdaten werden außerhalb der Maschine unmittelbar am Werkzeug vermessen und abgespeichert. Außerdem werden im Datenspeicher die Werkstückdaten, wie Dicke, Breite und die jeweiligen Profilmaße, abgelegt. Anhand dieser im Speicher abgelegten Werkzeug- und Werkstückdaten können die verstellbaren Spindeln der Maschine in axialer und radialer Richtung, die zugehörigen Andruckelemente 20, 21; 37, 38, die Andrucklineale 41, 42, die Tischplatten 33, 39', der Transportbalken 5, die Vorschubwalzen 6, der Abrichttisch 13 und das Anschlaglineal 30 verstellt werden, ohne daß das Werkzeug in der Maschine sitzt. Wird anschließend das für die vorgenommene Einstellung der Maschine erforderliche Werkzeug auf die entsprechende Spindel gesetzt, kann sofort mit der Bearbeitung der Werkstücke 3 begonnen werden. Ein Probedurchlauf ist nicht erforderlich. Die Umrüstzeit von einem Werkstückprofil auf ein anderes ist denkbar kurz; geübtes Personal zur Maschineneinstellung ist nicht notwendig.

Vorteilhaft erfolgt die Positionseinstellung vollautomatisch. Es ist aber bei einer einfacheren Ausführung der Maschine auch möglich, daß dem Bediener am Bildschirm der Steuerung angezeigt wird, welche Einstellungen an der Maschine vorgenommen werden müssen. Der Bediener kann dann von Hand die angezeigten Sollpositionswerte an den entsprechenden einstellbaren Teilen der Maschine vornehmen. Ebenso ist es vorteilhaft möglich, den größten Teil der Einstellungen vollautomatisch durchzuführen und nur für einige wenige Elemente, die selten verstellt werden müssen, die Einstellungen von Hand vorzunehmen. Ein solches Element ist beispielsweise der Anschlag 31.

Bei der oberen Spindel 16 und der linken Spindel 15 sind zur Einstellung der Andruckelemente 20, 21 und 37, 38 die Kehltiefe des Werkzeuges (Rmax- Rₘᵢₙ) und das Radialmaß Rₘₐₓ des Werkzeuges notwendig.

Um die linken Andrucklineale 41, 42 in Verstellrichtung 43, 44 (Fig. 2) einzustellen, wird als Maß der kleinste Flugkreisradius Rₘᵢₙ des linken Werkzeuges herangezogen. Die Andrucklineale 41, 42 werden so eingestellt, daß ihre Anlageflächen 85, 86 tangential zum kleinsten Flugkreisdurchmesser Rₘᵢₙ des Werkzeuges liegen.

Bei der Einstellung der Maschine auf das zu bearbeitende Werkstück 3 werden zunächst in der beschriebenen Weise die Andruckelemente 20, 21; 37, 38 sowie die Andrucklineale 41, 42 auf die erforderliche Position eingestellt. Anschließend wird das jeweilige Werkzeug mit diesen eingestellten Elementen in bezug auf das zu bearbeitende Werkstück in axialer und radialer Richtung eingestellt. Alternativ können auch die Vorschubwalzen 6 und die Andrucklineale 41, 42 direkt in bezug auf das Werkstück 3 in ihre gewünschte bzw. geforderte Lage eingestellt werden. Für diese Verstellungen wird jeweils ein Verstellantrieb verwendet, wie er anhand von Fig. 8 für die obere Spindel 16 beschrieben worden ist.

Sämtliche Einstellungen werden über eine Steuerung vorgenommen und über das Bedienfeld der Maschine eingeleitet.

Zur Verstellung der Spindeln sind beispielsweise CNC-Achsen bekannt, deren Regelung jedoch aufwendig und teuer ist. Es ist auch bekannt, eine Spindel mittels eines Motors anzutreiben, auf deren Welle ein Drehgeber zur Lageerfassung sitzt. Die Drehbewegung der Spindel wird über ein Trapezgewinde in eine Linearbewegung der Spindel umgesetzt. Solche Achsen sind konstruktiv einfach ausgebildet und preisgünstig, lassen aber hohe Positioniergenauigkeiten wegen des Spiels sowie des Verschleißes und der Fertigungsgenauigkeiten dieser Achsen nicht zu. Sofern es auf hohe Positioniergenauigkeiten nicht ankommt, zum Beispiel bei der Einstellung des Abrichttisches 13 oder des Anschlages 30 oder des Transportbalkens 5, können solche einfachen Achsen bei der beschriebenen Maschine eingesetzt werden. Für hohe Positioniergenauigkeiten wird bei der beschriebenen Maschine die Spindel 72 (Fig. 8) direkt oder über ein Getriebe 71 vom Motor 70 angetrieben. Der Verstellweg des Spindelschiebers 73 wird direkt am Spindelschieber 73 mittels des Meßsystems 75 gemessen. Der Verstellweg wird als Ist-Signal 83 der Regeleinheit 79 (Fig. 9) zugeführt. Die Regeleinheit 79 vergleicht den Istwert mit dem von der Steuerung 80 vorgegebenen Sollwert 81 und regelt dementsprechend den Motor 70, so daß der Spindelschieber 73 und damit die Spindel exakt in die Sollposition verfahren werden. Es spielt hierbei keine Rolle, ob in der Übertragungskette vom Motor 70 zum Spindelschieber 73 spielbehaftete Elemente vorhanden sind, da durch das Meßsystem 75 unmittelbar der Verstellweg des Spindelschiebers 73 erfaßt wird. Zur Erfassung des Verstellweges kann jeder Linearmaßstab eingesetzt werden, der die für den jeweiligen Anwendungsfall notwendige hohe Meßgenauigkeit aufweist. Als Meßsystem 75 kann jedes geeignete Linearmeßsystem eingesetzt werden.

Anhand der Fig. 8 und 9 ist die Verstellung der oberen Spindel 16 erläutert worden. Auf gleiche Weise werden auch die anderen mit hoher Genauigkeit zu verstellenden Elemente der Maschine verstellt, insbesondere die Spindeln und die Andruckelemente.

Ein weiteres wesentliches Merkmal der Maschine liegt darin, daß die Vorschubwalzen 6 eine Breite haben, die auf das maximal mögliche Breitenmaß der in der Maschine zu bearbeitenden Werkstücke 3 abgestimmt ist. Je nach Breite des durch die Maschine laufenden Werkstückes 3 werden die die Vorschubwalzen 6 tragenden Wellen 7 axial so verstellt, daß die Vorschubwalzen 6 mit optimaler Breite auf dem Werkstück 3 aufliegen. In Fig. 2 ist der Fall dargestellt, daß ein sehr breites Werkstück 3 durch die Maschine transportiert wird. Die Wellen 7 der Vorschubwalzen 6 sind so eingestellt, daß die Vorschubwalzen 6 über ihre gesamte Breite auf dem Werkstück 3 aufliegen.

Werden schmale Werkstücke 3 durch die Maschine transportiert (Fig. 3), können die Vorschubwalzen 6 bzw. ihre Wellen 7 in Achsrichtung 45 zurückgefahren werden, so daß die Vorschubwalzen 6 nur noch über einen Teil ihrer Breite auf dem Werkstück 3 aufliegen. In Fig. 3 ist dies für die der linken Spindel 15 gegenüberliegenden Vorschubwalzen 6 dargestellt. Da die Vorschubwalzen 6 nicht hochgenau positioniert werden müssen, reicht für ihre Verstellung eine übliche gesteuerte Achse aus. Die Vorschubwalzen 6 werden so weit axial verstellt, daß sie nicht mit dem benachbarten Werkzeug auf der linken Spindel 15 kollidieren. Das Verstellmaß hängt hierbei vom größten Flugkreisradius Rₘₐₓ des Werkzeuges 26 ab. Da bei schmalen Werkstücken die linke Spindel 15 quer zur Vorschubrichtung der Werkstücke 3 verstellt wird, ist eine entsprechende Axialverstellung der gegenüberliegenden Vorschubwalzen 6 notwendig. Die der Abrichtspindel 12 zugeordneten Vorschubwalzen 6 müssen nicht axial verstellt werden, sondern können in ihrer Lage verbleiben.

Aufgrund der Axialverstellung zumindest eines Teils der Vorschubwalzen 6 ist ein Auswechseln der Vorschubwalzen nicht erforderlich, wie dies bei herkömmlichen Maschinen der Fall ist. Hier werden je nach Breite der zu bearbeitenden Werkstücke unterschiedlich breite Vorschubwalzen auf die Wellen gesteckt. Da Maschinen eine größere Zahl von Vorschubwalzen aufweisen, erfordert die Umstellung erhebliche Zeit. Es ist auch bekannt, die Vorschubwalzen axial von Hand zu verstellen. Jedoch ist die Handverstellung zeitaufwendig und birgt die Gefahr in sich, daß es bei der Positionierung der linken Spindel zu einer Kollision mit falsch eingestellten Vorschubwalzen kommt. Bei der beschriebenen Maschine können die entsprechenden Vorschubwalzen rasch axial verstellt werden, so daß die Umstellung der Maschine innerhalb kürzester Zeit mit hoher Genauigkeit möglich ist. Die entsprechenden Vorschubwalzen 6 bzw. ihre Wellen 7 werden durch die Steuerung 80 verstellt, wenn entsprechende Werkstücke bearbeitet werden sollen. Dadurch ist es gewährleistet, daß es zu keiner Kollision zwischen den Vorschubwalzen 6 und dem Werkzeug kommt.

Bei der Axialverstellung der Vorschubwalzen 6 sind der größte Flugkreisradius Rₘₐₓ des Werkzeuges und die Breite des zu bearbeitenden Werkstückes 3 zu berücksichtigen.

## Patentansprüche

1. Maschine zum Bearbeiten von Werkstücken (3) aus Holz und Kunststoff, mit einer Transportbahn für die Werkstücke (3), auf der die Werkstücke durch die Maschine gefördert werden, mit mindestens einer angetriebenen Spindel (12, 14 bis 17), auf der ein Werkzeug (26) sitzt, mit dem die Werkstücke im Durchlauf bearbeitet werden, und mit wenigstens einem einstellbaren Element (6, 13; 20, 21; 30, 31; 33, 39'; 37, 38; 41, 42), welches in Bezug auf das Werkzeug (26) einstellbar ist und dessen einzustellende Position mit den Positionierdaten anhand von charakteristischen Daten bestimmt wird, die abrufbar sind,
**dadurch gekennzeichnet, dass** die Maschine wenigstens einen Datenspeicher aufweist, in dem die Daten abgelegt sind, dass die Daten zur Positionierung des einstellbaren Elementes (6, 13; 20, 21; 30, 31; 33, 39'; 37, 38; 41, 42) aus dem Datenspeicher abrufbar sind, ohne dass das Werkzeug (26) in der Maschine sitzen muss, und dass die charakteristischen Daten wenigstens den minimalen und maximalen Radius des Werkzeuges beinhalten.

2. Maschine nach Anspruch 1,
**dadurch gekennzeichnet, daß** die Daten (Rₘₐₓ - Rₘᵢₙ) die Kehltiefe des Werkzeuges (26) sind.

3. Maschine nach Anspruch 1 oder 2,
**dadurch gekennzeichnet, daß** die Daten (A) das Axialmaß des Werkzeuges (26) sind.

4. Maschine nach einem der Ansprüche 1 bis 3,
**dadurch gekennzeichnet, daß** das einstellbare Element Tischplatten (33, 39') der Maschine sind, die quer zur Vorschubrichtung der Werkstücke (3) verstellbar sind.

5. Maschine nach einem der Ansprüche 1 bis 4,
**dadurch gekennzeichnet, daß** das einstellbare Element Andruckelemente (20, 21; 37, 38) sind, die in Vorschubrichtung der Werkstücke (3) vor und hinter dem Werkzeug (26) vorgesehen sind.

6. Maschine nach einem der Ansprüche 1 bis 5,
**dadurch gekennzeichnet, daß** das einstellbare Elemente Andrucklineale (41, 42) sind, die quer zur Vorschubrichtung der Werkstücke (3) verstellbar sind.

7. Maschine nach einem der Ansprüche 1 bis 6,
**dadurch gekennzeichnet, daß** das einstellbare Element ein in Vorschubrichtung der Werkstücke (3) verstellbarer Anschlag (31) ist.

8. Maschine nach einem der Ansprüche 1 bis 7,
**dadurch gekennzeichnet, daß** die Positionierung des einstellbaren Elementes (13; 20, 21; 31; 33, 39'; 37, 38; 41, 42) über eine Steuerung (80) automatisch erfolgt.

9. Maschine nach einem der Ansprüche 1 bis 8, bei der die Spindel über einen Verstellantrieb verstellbar ist,
**dadurch gekennzeichnet, daß** der Verstellantrieb eine Stellspindel (72) aufweist, die durch einen Motor (70) antreibbar ist.

10. Maschine nach Anspruch 9,
**dadurch gekennzeichnet, daß** eine Motorwelle über ein Getriebe (71), vorzugsweise ein Kegelradgetriebe, mit der vorteilhaft als Trapezgewindespindel ausgebildeten und vorzugsweise maschinenfest gelagerten Stellspindel (72) antriebsverbunden ist.

11. Maschine nach Anspruch 9 oder 10,
**dadurch gekennzeichnet, daß** auf der Stellspindel (72) ein die Spindel (12, 14 bis 17) aufnehmender Träger (73) gelagert ist, der vorteilhaft mit wenigstens einer Spindelmutter (74) auf der Stellspindel (72) sitzt.

12. Maschine, insbesondere nach einem der Ansprüche 1 bis 11, bei der Andruckelemente in Vorschubrichtung vor und hinter dem Werkzeug angeordnet sind, die durch einen Verstellantrieb verstellbar sind,
**dadurch gekennzeichnet, daß** der Verstellantrieb eine Stellspindel (72) aufweist, die durch einen Motor (70) direkt antreibbar ist.

13. Maschine nach Anspruch 12,
**dadurch gekennzeichnet, daß** eine Motorwelle über ein Getriebe (71), vorzugsweise ein Kegelradgetriebe, mit der vorzugsweise als Trapezgewindespindel ausgebildeten und vorteilhaft maschinenfest gelagerten Stellspindel (72) antriebsverbunden ist.

14. Maschine nach Anspruch 12 oder 13,
**dadurch gekennzeichnet, daß** auf der Stellspindel (72) ein das jeweilige Andruckelement (20, 21; 37, 38) aufnehmender Träger (47 bis 49; 53 bis 55) gelagert ist, der vorteilhaft mit wenigstens einer Spindelmutter (74) auf der jeweiligen Stellspindel (72) sitzt.

15. Maschine nach einem der Ansprüche 9 bis 14,
**dadurch gekennzeichnet, daß** der Verstellantrieb mit einem Wegmeßsystem (75) gekoppelt ist, das vorteilhaft einen mit dem Träger (47 bis 49; 53 bis 55; 73) verbundenen Linearmaßstab (77) aufweist.

16. Maschine nach Anspruch 15,
**dadurch gekennzeichnet, daß** das Wegmeßsystem (75) einen Lesekopf (76) aufweist.

17. Maschine nach Anspruch 15 oder 16,
**dadurch gekennzeichnet, daß** das Wegmeßsystem (75) an eine Regeleinheit (79) angeschlossen ist.

18. Maschine nach einem der Ansprüche 9 bis 17,
**dadurch gekennzeichnet, daß** der Motor (70) des Verstellantriebes an die Regeleinheit (79) angeschlossen ist, die vorteilhaft in Abhängigkeit von Signalen des Wegmeßsystems (75) das einstellbare Element (13; 20, 21; 31; 33, 39'; 37, 38; 41, 42) und/oder die Spindel (12, 14 bis 17) positioniert.

19. Maschine nach Anspruch 18,
**dadurch gekennzeichnet, daß** die Regeleinheit (79) von der Steuerung (80) gelieferte Sollwerte (81) mit vom Wegmeßsystem (75) gelieferten Istwerten (83) vergleicht und in Abhängigkeit von diesem Soll-Istwert-Vergleich den Motor (70) regelt.

20. Maschine, insbesondere nach einem der Ansprüche 1 bis 19, mit Vorschubwalzen zum Transport der Werkstücke durch die Maschine,
**dadurch gekennzeichnet, daß** zumindest eine der Vorschubwalzen (6) in Achsrichtung quer zur Vorschubrichtung der Werkstücke (3) gesteuert verstellbar ist.

21. Maschine nach Anspruch 20,
**dadurch gekennzeichnet, daß** die Vorschubwalze (6) auf einer Welle (7) sitzt, die axial verschiebbar ist, und daß vorteilhaft die Breite der Vorschubwalze (6) an das maximal mögliche Breitenmaß der in der Maschine zu bearbeitenden Werkstücke (3) angepaßt ist.

22. Maschine nach einem der Ansprüche 1 bis 21, bei der das Werkzeug in einem Absaugraum liegt,
**dadurch gekennzeichnet, daß** die Größe des Absaugraumes (46, 52) an den Durchmesser des Werkzeuges (26) anpaßbar ist.

23. Maschine nach Anspruch 22,
**dadurch gekennzeichnet, daß** der Absaugraum (46, 52) zumindest teilweise von den vorteilhaft quer zur Achse des Werkzeuges (26) verstellbaren Trägern (47 bis 49; 53 bis 55) für die Andruckelemente (20, 21; 37, 38) begrenzt ist.

24. Maschine nach Anspruch 23,
**dadurch gekennzeichnet, daß** der Verstellantrieb für die Träger (47 bis 49; 53 bis 55) an die Steuerung (80) angeschlossen ist.

25. Verfahren zur Einstellung der Maschine nach einem der Ansprüche 1 bis 24, bei dem charakteristische Daten des Werkzeuges (26) vermessen und einer Steuerung (80) der Maschine zugeführt werden, die unter Berücksichtigung dieser Daten die Position für das einstellbare Element (6, 13; 20, 21; 30, 31; 33, 39'; 37, 38; 41, 42) berechnet,
**dadurch gekennzeichnet, dass** die charakteristischen Daten wenigstens den minimalen und maximalen Radius des Werkzeuges beinhalten und in einem Datenspeicher der Maschine abgelegt werden, aus dem die Daten der Steuerung (80) zugeführt werden, ohne dass das Werkzeug (26) in der Maschine sitzen muss, und dass die Steuerung die Positionierdaten zur Weiterverarbeitung und automatischen Positionierung bereitstellt.

26. Verfahren nach Anspruch 25,
**dadurch gekennzeichnet, daß** die Steuerung (80) die Positionierung des einstellbaren Elementes (13; 20, 21; 31; 33, 39'; 37, 38; 41, 42) automatisch vornimmt, und daß vorteilhaft die Positionierdaten zur Anzeige gebracht werden .

27. Verfahren nach Anspruch 25 oder 26,
**dadurch gekennzeichnet, daß** das einstellbare Element (13; 20, 21; 37, 38) relativ zum Werkzeug (26) positioniert wird.

28. Verfahren nach einem der Ansprüche 25 bis 27,
**dadurch gekennzeichnet, daß** nach der Positionierung die Spindel (12, 14 bis 17) mit dem einstellbaren Element (20, 21; 37, 38) relativ zum zu bearbeitenden Werkstück (3) eingestellt wird.

29. Verfahren nach einem der Ansprüche 25 bis 28,
**dadurch gekennzeichnet, daß** als charakteristische Daten die Dicke, die Breite und die Axialmaße der Seiten des herzustellenden Werkstückes (3) herangezogen werden.

30. Verfahren nach einem der Ansprüche 25 bis 29,
**dadurch gekennzeichnet, daß** nach der Positionierung die Spindel (12, 14 bis 17) mit dem einstellbaren Element (20, 21; 37, 38) unter Berücksichtigung der charakteristischen Daten des Werkzeuges (26) und des Werkstückes (3) relativ zum zu bearbeitenden Werkstück eingestellt wird.

## Claims

1. Machine for working workpieces (3) of wood and plastic with a conveyor trajectory onto which the workpieces (3) are transferred through the machine, with at least one driven spindle (12, 14 to 17) onto which a tool (26) is located, with which the workpieces are machined as they pass and with at least one adjustable element (6, 13; 20, 21; 30, 31; 33, 39'; 37, 38; 41, 42) which is adjustable with respect to the tool (26) and whose position to be adjusted with the positioning data is determined on the basis of characteristic data which can be requested,
**characterised in that** the machine comprises at least one memory in which the data are deposited, that the data for positioning of the adjustable element (6, 13; 20, 21; 30, 31; 33, 39'; 37, 38; 41, 42) can be requested out of the memory, without the need of the tool (26) that has to be situated within the machine and that the characteristic data comprise at least the minimum and maximum radius of the tool.

2. Machine according to claim 1,
**characterised in that** the data (Rₘₐₓ - Rₘᵢₙ) are the groove depth of the tool (26).

3. Machine according to claim 1 or 2,
**characaterised in that** the data (A) are the axial dimension of the tool (26).

4. Machine according to one of the claims 1 to 3,
**characterised in that** the adjustable element are table boards (33, 39') of the machine, being adjustable transversally to the feed direction of the workpieces (3).

5. Machine according to one of the claims 1 to 4,
**characterised in that** the adjustable element are pressure elements (20, 21; 37, 38) provided in the feed direction of the workpieces (3) are provided in front of and behind the tool (26).

6. Machine according to one of the claims 1 to 5,
**characterised in that** the adjustable element are pression rulers (41, 42) which are adjustable transversally to the feed direction of the workpieces (3).

7. Machine according to one of the claims 1 to 6,
**characterised in that** the adjustable element is a stop (31), displacable in the feed direction of the workpieces (3).

8. Machine according to one of the claims 1 to 7,
**characterised in that** the positioning of the adjustable element (13; 20, 21; 30, 31; 33, 39'; 37, 38; 41, 42) takes place automatically by a control (80).

9. Machine according to one of the claims 1 to 8,
in which the spindle is adjustable by an adjustment drive,
**characterised in that** the adjustment drive comprises a setting spindle (72) which can be driven by a motor (70).

10. Machine according to claim 9,
**characterised in that** a motor shaft, by means of a gear (71), preferably a bevel gear, is drivingly connected with the setting spindle (72), advantageously configured as a trapezoidal-thread spindle, its bearing preferably firmly coupled with the machine.

11. Machine according to claim 9 or 10,
**characterised in that** on the setting spindle (72), accommodating the spindle (12, 14 to 17), a support (73) is mounted, which is advantageously located with at least one spindle nut (74) on the setting spindle (72).

12. Machine, particularly according to one of the claims 1 to 11, at which pressure elements in the direction of feed are arranged before and behind the tool, which are adjustable by an adjustment drive,
**characterised in that** the adjustment drive comprises a setting spindle (72) which can be driven directly by a motor (70).

13. Machine according to claim 12,
**characterised in that** a motor shaft, by means of a gear (71), preferably a bevel gear, is drivingly connected with the setting spindle (72), advantageously configured as a trapezoidal-thread spindle, its bearing preferably firmly coupled with the machine.

14. Machine according to claim 12 or 13,
**characterised in that** on the setting spindle (72), receiving the respective pressing element (20, 21; 37, 38), a support (47 to 49; 53 to 55) is mounted, which advantageously is located with at least one spindle nut (74) on the respective setting spindle (72).

15. Machine according to one of the claims 9 to 14,
**characterised in that** the adjustment drive is coupled to a position measuring system (75), comprising advantageously a linear measuring scale (77) connected with a support (47 to 49; 53 to 55; 73).

16. Machine according to claim 15,
**characterised in that** the position measuring system (75) comprises a reading head (76).

17. Machine according to claim 15 or 16,
**characterised in that** the position measuring system (75) is attached to a control unit (79).

18. Machine according to one of the claims 9 to 17,
**characterised in that** the motor (70) of the adjustment drive is in circuit with the control unit (79) which advantageously positions the adjustable element (13; 20, 21; 31; 33, 39'; 37, 38; 41, 42) and/or the spindle (12, 14 to 17) dependant on signals of the position measuring system (75).

19. Machine according to claim 18,
**characterised in that** the control unit (79) compares set values (81), delivered by the control (80) with the actual values (83), delivered by the position measuring system (75) and regulates dependant from this theoretical-actual comparison the motor (70).

20. Machine, particularly according to one of the claims 1 to 19,
with feed rolls for the transport of the workpieces through the machine, **characterised in that** at least one of the feed rolls (6) is controlled adjustable in the axial direction of transversal to the feed direction of the workpieces (3).

21. Machine according to claim 20,
**characterised in that** the feed roll (6) is located on a shaft (7) which is axially displacable and that advantageously the width of the feed roll (6) is adapted to the maximum possible width dimension of workpieces (3) to be machined in the machine.

22. Machine according to one of the claims 1 to 21,
at which the tool is located within a suction chamber,
**characterised in that** the size of the suction chamber (46, 52) is adaptable to the diameter of the tool (26).

23. Machine according to claim 22,
**characterised in that** the suction chamber (46, 52) is delimited, at least partially, by the supports (47 to 49; 53 to 55) for the pressure elements (20, 21; 37, 38), these supports displacable advantageously transversally to the axis of the tool (26).

24. Machine according to claim 23,
**characterised in that** the adjustment drive for the supports (47 to 49; 53 to 55) is connected to the control (80).

25. Method for the adjustment of the machine according to the claims 1 to 24, at which the characteristical data of the tool (26) are measured and supplied to a control (80) of the machine, which calculates the position for the adjustable element (6, 13; 20, 21; 30, 31; 33, 39'; 37, 38; 41, 42) taking these dates into account,
**characterised in that** the characteristical data include at least the minimum and maximum radius of the tool and are deposited in a memory of the machine, out of which the data are supplied to the control (80), without the need for the tool (26) being located in the machine and that the control allocates the positioning data for subsequent processing and automatic positioning.

26. Method according to claim 25,
**characterised in that** the control (80) undertakes automatically the positioning of the adjustable element (13; 20, 21; 33, 39'; 37, 38; 41, 42) and that advantageously the positioning data are indicated.

27. Method according to claim 25 or 26,
**characterised in that** the adjustable element (13; 20, 21; 33, 39'; 37, 38) are positioned relatively to the tool (26).

28. Method according to one of the claims 25 to 27,
**characterised in that** after the positioning, the spindle (12, 14 to 17) is set with the adjustable element (20, 21; 37, 38) relatively to the workpiece (3) to be machined.

29. Method according to one of the claims 25 to 28,
**characterised in that** as characteristical data the thickness, the width and the axial dimensions of the sides of the workpiece (3) to be manufactured are fetched.

30. Method according to one of the claims 25 to 29,
**characterised in that** after positioning the spindle (12, 14 to 17) is adjusted relatively to the workpiece to be machined by the adjustable element (20, 21; 37, 38), taking into account the characteristical data of the tool (26) and the workpiece (3).

## Revendications

1. Machine à travailler des pièces à usiner (3) en bois et plastique avec une trajectoire transporteuse pour les pièces (3) dans laquelle les pièces sont convoyées à travers la machine avec au moins une broche (12, 14 à 17) entraînée, sur laquelle est placé un outil (26) avec lequel les pièces sont usinées au passage et avec au moins un élément ajustable (6, 13; 20, 21; 30, 31; 33, 39'; 37, 38; 41, 42) lequel est ajustable par rapport à l'outil (26) et dont la position à ajuster est déterminée avec les données de positionnement en s'appuyant sur des données caractéristiques, étant disponible à l'appellation,
**caractérisée en ce que** la machine comprend au moins une mémoire d'informations, dans laquelle les données sont stockées,et **en ce que** les données pour le positionnement de l'élément (6, 13; 20, 21; 30, 31; 33, 39'; 37, 38; 41, 42) ajustable sont disponibles à l'appellation e la mémoire d'informations sans que l'outil (26) doive être placé dans la machine et que les données caractéristiques comprenent au moins le rayon minimum et maximum de l'outil.

2. Machine selon revendication 1,
**caractérisée en ce que** les données (Rₘₐₓ - Rₘᵢₙ) représentent la profondeur canneleuse de l'outil (26).

3. Machine selon revendication 1 ou 2,
**caractérisée en ce que** les données (A) représentent la mesure axiale de l'outil (26).

4. Machine selon une des revendications 1 à 3,
**caractérisée en ce que** l'élément ajustable est constitué par des plateaux de table (33, 39') de la machine, déplaçables transversalement à la direction d'avance des pièces (3).

5. Machine selon une des revendications 1 à 4,
**caractérisée en ce que** l'élément ajustable est constitué par des éléments de pression appliquée (20, 21; 37, 38) prévus dans la direction d'avance des pièces (3) devant et derrière l'outil (26).

6. Machine selon une des revendications 1 à 5,
**caractérisée en ce que** l'élément ajustable est constitué par des règles de pression appliquée (41, 42), déplaçables transversalement à la direction d'avance des pièces (3).

7. Machine selon une des revendications 1 à 6,
**caractérisée en ce que** l'élément ajustable est une butée, déplaçable dans la direction d'avance des pièces (3).

8. Machine selon une des revendications 1 à 7,
**caractérisée en ce que** le positionnement de l'élément ajustable (13; 20, 21; 30, 31; 33, 39'; 37, 38; 41, 42) a lieu automatiquement par une commande (80).

9. Machine selon une des revendications 1 à 8,
dans laquelle la broche est déplaçable **caractérisée en ce que** l'entraînement de réglage comprend une broche de réglage (72), pouvant être entraînée par un moteur (70).

10. Machine selon revendication 9,
**caractérisée en ce qu'** un arbre du moteur est connecté propulsivement par un engrenage (71), de préférence un engrenage conique, avec la broche de réglage (72), avantageusement configurée comme broche de filet trapézoïdal et de préférence logée directement à la machine.

11. Machine selon revendication 9 ou 10,
**caractérisée en ce que** sur la broche de réglage (72) est monté un support (73), recevant la broche (12, 14 à 17), avantageusement fixée avec au moins un écrou de broche (74) sur la broche de réglage (72).

12. Machine, en particulier selon une des revendications 1 à 11, dans laquelle les éléments de pression appliquée sont disposés dans la direction d'avance devant et derrière l'outil et déplaçable par un entraînement de réglage,
**caractérisée en ce que** l'entraînement de réglage comprend une broche de réglage (72) pouvant être entraînée directement par un moteur (70).

13. Machine selon revendication 12,
**caractérisée en ce qu'**un arbre du moteur est connecté propulsivement sur un engrenage, de préférence un engrenage conique, avec la broche de réglage (72), de préférence configurée comme broche de filet trapézoïdal et avantageusement logée directement à la machine.

14. Machine selon revendication 12 ou 13,
**caractérisée en ce que** sur la broche de réglage (72) est monté un support (47 à 49; 53 à 55) recevant l'élément de pression appliquée (20, 21; 37, 38) respectif, ce support étant placé avantageusement avec au moins un écrou de broche (74) sur la broche de réglage (72) respective.

15. Machine selon une des revendications 9 à 14,
**caractérisée en ce que** l'entraînement de réglage est couplé avec un système de capteur de position (75), lequel comprend avantageusement un système de mesure linéaire (77) connecté avec un support (47 à 49; 53 à 55; 73).

16. Machine selon revendication 15,
**caractérisée en ce que** le système de capteur de position (75) comprend une tête de lecture (76).

17. Machine selon revendication 15 ou 16,
**caractérisée en ce que** le système de capteur de position (75) est connecté à une unité de réglage (79).

18. Machine selon une des revendications 9 à 17,
**caractérisée en ce que** le moteur (70) de l'entraînement de réglage est branché avec l'unité de réglage (79), laquelle positionne avantageusement l'élément de réglage (13; 20, 21; 31; 33, 39'; 37, 38; 41, 42) et/ou la broche (12, 14 à 17) en fonction des signaux du système de capteur de position.

19. Machine selon revendication 18,
**caractérisée en ce que** l'unité de réglage (79) compare des valeurs exigées (81) fournies par la commande (80) avec les valeurs réelles (83), fournies par le système de capteur de position (75) et règle le moteur (70) en fonction de cette comparaison des valeurs consignées et des valeurs réelles.

20. Machine, en particulier selon une des revendications 1 à 19
munie de rouleaux d'alimentation pour le transport des pièces à travers la machine,
**caractérisée en ce que** au moins un des rouleaux d'alimentation (6) est dans la direction axiale transversalement à la direction d'avance des pièces (3).

21. Machine selon revendication 20,
**caractérisée en ce que** le rouleau d'alimentation (6) est situé sur un arbre (7) déplaçable axialement, et que la largeur de rouleau d'alimentation (6) est ajustée avantageusement à la dimension de largeur maximum possible des pièces (3) à usiner dans la machine.

22. Machine selon une des revendications 1 à 21,
dans laquelle l'outil est situé dans un espace-aspirateur,
**caractérisé en ce que** la grandeur de l'espace-aspirateur (46, 52) est ajustable au diamètre de l'outil (26).

23. Machine selon revendication 22,
**caractérisée en ce que** l'espace-aspirateur (46, 52) est délimité au moins partiellement par les supports (47 à 49, 53 à 55) pour les éléments de pression (20, 21; 37, 38) appliquée, déplaçables avantageusement de façon transversale à l'axe de l'outil (26).

24. Machine selon revendication 23,
**caractérisée en ce que** l'entraînement de réglage pour les supports (47 à 49, 53 à 55) est connecté à la commande (80).

25. Procédé de réglage de la machine selon une des revendications 1 à 24,
dans lequel les données caractéristiques de l'outil (26) sont mesurées et amenées à une commande (80) de la machine, laquelle calcule la position pour l'élément à ajuster (6, 13 ; 20, 21; 30, 31; 33, 39'; 37, 38; 41, 42) en tenant compte de ces données,
**caractérisé en ce que** les données caractéristiques comportent au moins le rayon minimal et maximal de l'outil et sont déposées dans une mémoire d'informations de la machine, de laquelle les données sont amenées vers la commande (80), sans que l'outil (26) doive être placé dans la machine, et **en ce que** la commande mobilise les données de positionnement pour traitement ultérieur et positionnement automatique.

26. Procédé selon revendication 25,
**caractérisé en ce que** la commande (80) exécute automatiquement le positionnement de l'élément ajustable (13 ; 20, 21; 31; 33, 39'; 37, 38; 41, 42) et que les données de positionnement sont transférées avantageusement pour l'indication.

27. Procédé selon revendication 25 ou 26,
**caractérisé en ce que** l'élément ajustable (13 ; 20, 21; 37, 38) est positionné relativement par rapport à l'outil (26).

28. Procédé selon une des revendications 25 à 27,
**caractérisé en ce que,** après le positionnement, la broche (12, 14 à 17) est ajustée par l'élément ajustable (20, 21; 37, 38) relativement par rapport à la pièce (3) à usiner.

29. Procédé selon une des revendications 25 à 28,
**caractérisé en ce que** sont appelées comme données caractéristiques, l'épaisseur, la largeur et les mesures axiales des côtés de la pièce à usiner (3).

30. Procédé selon une des revendications 25 à 29,
**caractérisé en ce que,** après le positionnement, la broche (12, 14 à 17) est ajustée par l'élément ajustable (20, 21; 37, 38) en tenant compte des données caractéristiques de l'outil (26) et de la pièce (3) relativement par rapport à la pièce à usiner.
